# FASCICULE DE BREVET EUROPEEN

(11) **EP 3 877 309 B1**
(45) Date de publication et mention de la délivrance du brevet: **21.02.2024**
(21) Numéro de dépôt: 19818206.5
(22) Date de dépôt: 04.11.2019
(51) Int. Cl.: A01K 43/04, B65G 47/91, B65B 23/08, B65G 29/02

(54) **INSTALLATION DE TRI DE PIECES EN DEFILEMENT**
EINHEIT ZUM SORTIEREN VON BEWEGTEN TEILEN
UNIT FOR SORTING MOVING PARTS

(30) Priorité: 05.11.2018 FR 1860158
(43) Date de publication de la demande: 15.09.2021
(73) Titulaire: Egg-Chick Automated Technologies, 29400 Landivisiau Cedex (FR)
(72) Inventeur: ROBERT, Pierre, 49300 Cholet (FR); QUEVEAU, Laurent, 49610 Mûrs-Erigné (FR)
(74) Mandataire: Plasseraud IP
(86) Numéro de dépôt international: PCT/FR2019/052604
(87) Numéro de publication internationale: WO 2020/094958

(56) Documents cités:
- EP-A1- 3 194 309
- WO-A1-00/54579

## Description

L'invention a pour objet une installation de tri de pièces en défilement sur un tapis convoyeur comprenant un dispositif de transfert de pièces apte à extraire des pièces sélectivement identifiées non conformes hors dudit tapis convoyeur, le dispositif de transfert de pièces comprenant un rouleau apte à être monté mobile en rotation transversalement au-dessus dudit tapis convoyeur et une pluralité d'outils de saisie s'étendant radialement en périphérie dudit rouleau, aptes à prélever sélectivement chacun une pièce dudit tapis convoyeur lorsqu'ils sont amenés dans une position de prélèvement définie par une première position angulaire dudit rouleau et à libérer ladite pièce prélevée lorsqu'ils sont amenés dans une position de libération définie par une deuxième position angulaire dudit rouleau, chaque outil de saisie comprenant une ventouse fixée sur un manchon de support tubulaire monté sur ledit rouleau et débouchant à l'intérieur dudit rouleau, ledit manchon de support tubulaire définissant un conduit interne pourvu d'un orifice latéral apte à créer une communication entre ladite ventouse et une chambre principale ménagée à l'intérieur dudit rouleau maintenue en dépression par rapport à l'air environnant.

Une application préférée de l'invention se situe dans le domaine avicole pour le traitement des oeufs de volaille. Par exemple, dans le cadre d'une installation industrielle de tri des oeufs en fonction des résultats d'opérations de mirage, visant à détecter des oeufs non conformes à une utilisation ultérieure prévue, il est connu de placer les oeufs suivant des emplacements régulièrement répartis dans des casiers disposés en série sur un tapis convoyeur, qui les entraîne en défilement à travers un poste d'examen de mirage, destiné à détecter les oeufs non conformes, puis vers un poste d'extraction des oeufs, afin d'écarter ceux qui auront été détectés non conformes.

Une installation de tri telle que décrite en préambule ci-dessus, dans son application au traitement des oeufs de volaille, est bien connue de l'homme du métier, notamment par l'exemple qu'en donne le document de brevet EP3194309 qui divulgue une installation selon le préambule de la revendication 1.

L'installation décrite dans ce document comporte un poste d'extraction des oeufs mettant en oeuvre un dispositif de transfert des oeufs de type à tambour tournant disposé transversalement au-dessus du tapis convoyeur. Ce tambour ou rouleau porte sur sa périphérie des outils de saisie à ventouse, entraînés par la rotation du rouleau dans une position dite de prélèvement en regard du tapis convoyeur pour saisir les oeufs identifiés non conformes, puis dans une position dite de libération des oeufs, déterminée au cours de la rotation du rouleau, où les oeufs prélevés par les outils de saisie à ventouse sont libérés, par exemple dans un bac de réception des oeufs. Pour ce faire, une chambre de pression, ménagée à l'intérieur du rouleau, est maintenue en dépression par rapport à l'air environnant et chaque ventouse est monté solidaire d'un support fixé sur le rouleau, pourvu d'un conduit interne apte à mettre en communication la ventouse avec la chambre du rouleau en dépression, ce conduit étant équipé d'une vanne commandée pour ouvrir ou fermer ladite communication. Ainsi, lorsque la communication est ouverte, en position de prélèvement des outils, une dépression est assurée dans la ventouse, qui vient en prise par aspiration avec l'œuf. Puis, lorsque la communication est fermée, en position de libération des outils, la ventouse ne subit plus la dépression, ce qui permet de relâcher l'œuf dans le bac de réception.

Une telle installation est particulièrement avantageuse car elle est parfaitement compatible avec un traitement de pièces en série défilant en continu et partant, permet de supporter des cadences de traitement élevées.

Cependant, cette installation connue de l'art antérieur présente un certain nombre d'inconvénients. En effet, la capacité à assurer une extraction fiable et efficace des oeufs détectés non conformes du tapis convoyeur, repose sur un positionnement adéquat des ventouses par rapport au niveau des oeufs en défilement, lorsqu'elles sont amenées par le rouleau en position de prélèvement en regard du tapis. Ainsi, au cours de la rotation du rouleau, dans la position de prélèvement, les ventouses doivent être positionnées par rapport au niveau des oeufs de telle manière qu'elles viennent affleurer au contact des oeufs défilant en regard des ventouses sur le tapis convoyeur, pour ainsi permettre de venir correctement en prise par aspiration avec les oeufs à extraire lorsque les ventouses concernées sont mises en dépression par la commande en ouverture de la vanne correspondante. En effet, si le contact avec l'œuf n'est pas opéré correctement en position de prélèvement au moment où la ventouse est mise en dépression, l'aspiration n'est pas suffisante pour prélever l'œuf.

Or, il s'avère que les oeufs traités sont bien souvent différents par leur taille. Partant, le niveau des oeufs en défilement n'est pas partout homogène, ce qui rend difficile la gestion du positionnement correct des ventouses par rapport au niveau des oeufs pour qu'elles puissent assurer avec efficacité le prélèvement. Ce problème de défaut d'homogénéité du niveau des oeufs en défilement peut également être accentué par un défaut de planéité des casiers dans lesquels sont reçus les oeufs et qui sont entraînés en série les uns après les autres sur le tapis convoyeur. Ainsi, même en ajustant au mieux la position du rouleau rotatif à un niveau plus ou moins éloigné du tapis convoyeur, le passage des ventouses en position de prélèvement ne garantit pas la bonne extraction de tous les oeufs détectés non conformes.

En outre, la mise en oeuvre d'une vanne d'ouverture et de fermeture pour assurer la mise en dépression sélective de chaque ventouse lors de leur passage en position de prélèvement nécessite un agencement de pièces relativement complexe.

Enfin, comme on l'a vu, la bonne réussite de l'opération d'extraction des oeufs réside dans le fait que les ventouses entraînées par le rouleau en position de prélèvement viennent affleurer au contact des oeufs en défilement. Autrement dit, à chaque passage en position de prélèvement au cours de la rotation du rouleau, toutes les ventouses sont prévues pour venir au contact des oeufs, y compris les ventouses qui, en définitive, ne seront pas commandées en saisie d'un oeuf. Cette mise en contact systématique des oeufs en défilement avec toutes les ventouses amenées en position de prélèvement, est susceptible de représenter un risque sanitaire non négligeable.

Dans ce contexte, la présente invention a pour but de proposer une installation de tri exempt de l'une au moins des limitations précédemment évoquées.

A cette fin, l'installation de l'invention, par ailleurs conforme à la définition générique qu'en donne le préambule ci-dessus, est essentiellement caractérisée en ce que toutes les ventouses amenées en position de prélèvement sont mises en dépression, chaque manchon de support tubulaire étant monté mobile en translation suivant son axe sur ledit rouleau, un actionneur étant adapté à commander sélectivement, dans ladite position de prélèvement, le déplacement dudit manchon de support tubulaire en direction dudit tapis convoyeur de façon que ladite ventouse vienne en prise avec ladite pièce à prélever.

Ainsi, parmi les ventouses, toutes mises en dépression, qui sont amenées en position de prélèvement par la rotation du rouleau, seules celles qui doivent effectivement saisir une pièce en défilement identifiée comme non conforme sont amenées au contact de ladite pièce, grâce à la commande sélective en translation de leur manchon de support, permettant de déplacer radialement la ventouse depuis une position rapprochée du rouleau vers une position éloignée de celui-ci en direction du tapis convoyeur, dans laquelle elle est prévue pour venir en contact avec la pièce à saisir.

Autrement dit, dans l'installation de l'art antérieur, les ventouses sont fixes et, lorsqu'elles sont amenées en position de prélèvement au cours de la rotation du rouleau, elles ne sont pas encore mises en dépression, mais sont toutes au contact des oeufs, le prélèvement s'opérant par la commande sélective de la mise en dépression des seules ventouses devant effectivement saisir des oeufs. Par contraste, dans l'installation de l'invention, les ventouses sont mobiles et, lorsqu'elles sont amenées en position de prélèvement au cours de la rotation du rouleau, elles ne sont pas au contact des oeufs, mais sont par contre toutes mises en dépression, le prélèvement s'opérant alors par la commande sélective de la mise en contact avec les oeufs des seules ventouses devant effectivement saisir des oeufs, grâce à la capacité de déplacement radial des ventouses offerte par leur manchon de support mobile en translation. Il en résulte un double avantage, à la fois en termes sanitaires, car les contacts avec les oeufs s'en trouvent drastiquement réduits, limités en pratique aux seules ventouses devant effectivement prélever un oeuf, et également en termes de simplification, la gestion du circuit pneumatique de mise en dépression des ventouses étant rendue moins complexe.

En outre, grâce à la capacité de déplacement radial des ventouses en direction du tapis convoyeur sous l'effet de la mobilité en translation de leur manchon support par rapport au rouleau rotatif, cet agencement offre la possibilité de s'adapter à des pièces de dimensions sensiblement différentes.

Avantageusement, ledit manchon de support tubulaire est constitué d'un élément de tube creux s'étendant de part et d'autre de la paroi dudit rouleau, à travers une bague de guidage de traversée de paroi, comportant un fût en saillie d'une face externe de ladite paroi, monté par une première extrémité dans un trou de ladite paroi, ledit élément de tube creux étant connecté par une liaison glissante avec ladite bague de guidage autorisant un mouvement de translation relatif entre ledit élément de tube creux et ladite bague de guidage.

Avantageusement, la surface interne dudit fût comporte deux saillies cylindriques de support d'une surface externe dudit tube creux, agencées aux extrémités respectives dudit fût, et reliées entre elles par une surface cylindrique interne en retrait définissant une chambre secondaire, ladite saillie cylindrique de support agencée du côté de ladite première extrémité dudit fût étant pourvues d'une pluralité de gorges longitudinales destinées à mettre en communication ladite chambre secondaire avec ladite chambre principale du rouleau.

Avantageusement, ledit élément de tube creux est mobile entre une position rétractée à l'intérieur du rouleau, sous l'effet de la dépression régnant dans la chambre principale ménagée à l'intérieur du rouleau, dans laquelle ledit orifice est en communication directe avec ladite chambre principale pour transférer la dépression à ladite ventouse, et une position déployée vers le tapis convoyeur sous l'action dudit actionneur, dans laquelle ledit orifice est en communication directe avec ladite chambre secondaire pour transférer la dépression à ladite ventouse.

Avantageusement, ledit fût présente à sa première extrémité une collerette par laquelle il est apte à prendre appui sur un bord périphérique dudit trou, par l'intermédiaire d'un joint d'étanchéité.

De préférence, ledit actionneur comporte un vérin monté à l'intérieur dudit rouleau, adapté à pousser ledit manchon de support tubulaire à travers ladite paroi dudit rouleau vers l'extérieur dudit rouleau.

Avantageusement, ladite installation comprend un moyen formant came agencé à l'intérieur dudit rouleau, fixe par rapport à la rotation dudit rouleau, ladite came étant profilée de sorte que, lors de la rotation dudit rouleau subséquente à l'atteinte de ladite position de prélèvement, ledit manchon de support tubulaire est apte à rencontrer la came et à suivre la trajectoire de came de façon à forcer le déplacement dudit manchon de support tubulaire vers l'extérieur dudit rouleau jusqu'à ce que ledit orifice soit au moins partiellement mis à l'air libre en position de libération.

Avantageusement, les première et deuxième positions angulaires, définissant respectivement lesdites positions de prélèvement et de libération, sont décalées l'une par rapport à l'autre d'au moins 180°.

Avantageusement, ladite installation comprend un module de commande adapté à fournir des instructions de vitesse de rotation dudit rouleau de façon à entraîner la rotation des ventouses avec une vitesse et une phase synchronisées sur le défilement des pièces.

De préférence, ladite installation est adaptée au traitement des oeufs de volailles, ledit dispositif de transfert étant disposé en aval d'un poste de mirage destiné à détecter les oeufs non conformes en vue de leur extraction dudit tapis convoyeur par ledit dispositif de transfert.

D'autres particularités et avantages de l'invention ressortiront à la lecture de la description faite ci-après d'un mode de réalisation particulier de l'invention, donné à titre indicatif mais non limitatif, en référence aux dessins annexés, dans lesquels :
- la figure 1 représente une vue schématique de l'installation de tri de pièce en défilement sur un tapis convoyeur conforme à l'invention ;
- les figures 2 à 6 sont des vues schématiques en coupe du dispositif de transfert de l'installation de la figure 1, à différentes étapes de la rotation du rouleau portant les outils de saisie à ventouse entre la position de prélèvement et la position de libération, parmi lesquelles :

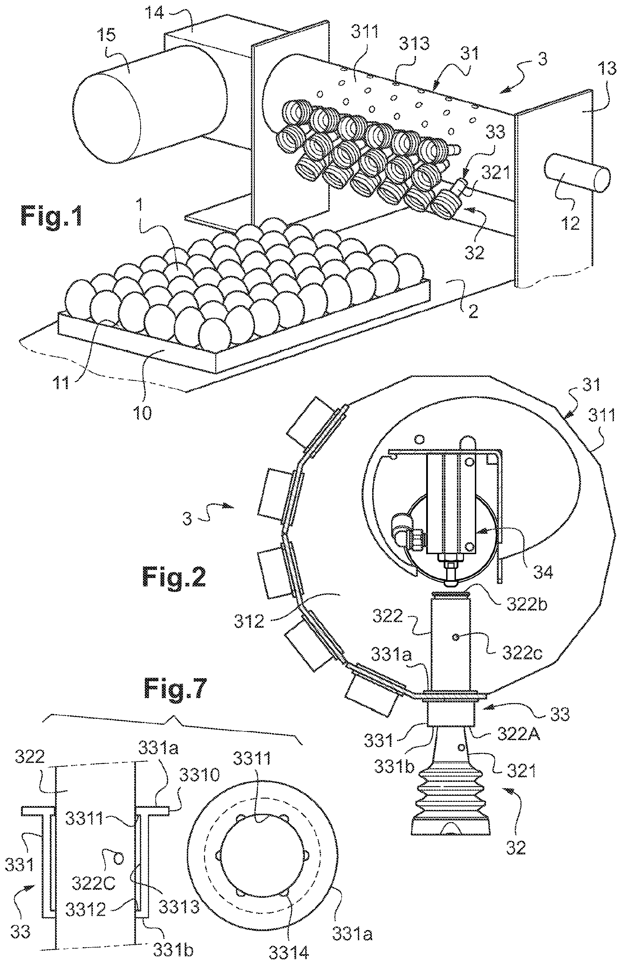

- la figure 2 représente une vue schématique en coupe du dispositif de transfert, dans une position angulaire du rouleau correspondant à la position de prélèvement pour la ventouse représentée par rapport au tapis convoyeur, le manchon de support tubulaire associé à la ventouse à piloter étant représenté ici en position rétractée,

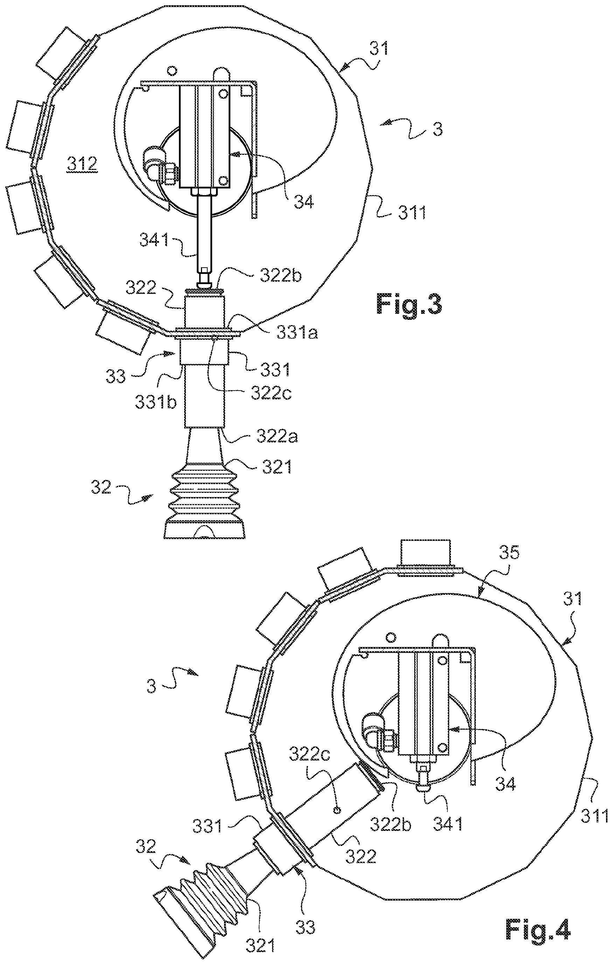

- la figure 3 représente une vue en coupe similaire à celle de la figure 2, dans laquelle le manchon de manchon de support tubulaire associé à la ventouse à piloter est ici représenté en position déployée sous l'effet de l'actionneur intégré au rouleau,
- la figure 4 représente une vue en coupe du dispositif de transfert illustré précédemment, dans une position angulaire subséquente du rouleau, dans laquelle le manchon de support tubulaire associé à la ventouse arrive en contact avec le moyen formant came intégré au rouleau,

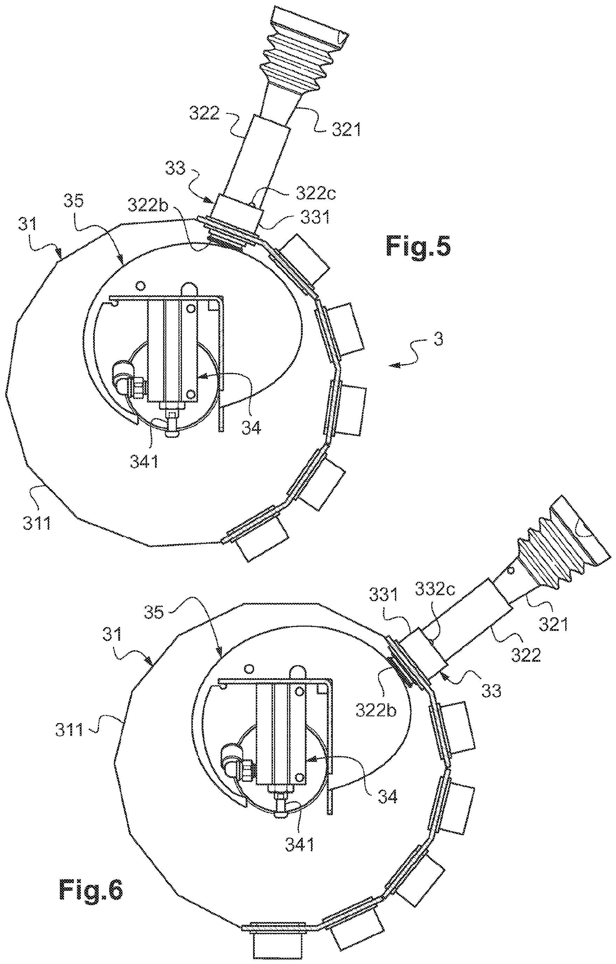

- les figures 5 et 6 représentent des vues en coupe du dispositif de transfert illustré précédemment, montrant l'arrivée du rouleau dans une position angulaire correspondant à la position de libération pour la ventouse représentée,
- la figure 7 représente une vue schématique en coupe longitudinale et en vue de dessus de la bague de guidage de traversée de paroi, dans laquelle est monté le manchon de support tubulaire.

La description qui va être faite ci-après correspond à un mode de mise en oeuvre particulier de l'invention, suivant lequel l'installation de traitement des pièces en défilement est une installation de traitement des oeufs de volailles. Ainsi, en référence à la figure 1, les oeufs à traiter 1 sont disposés chacun dans une alvéole 11 d'un casier de transport 10, dont les alvéoles sont organisées en série de rangées et de colonnes parallèles entre elles. Les différents casiers sont disposés les uns après les autres sur une ligne de convoyage comportant un tapis convoyeur 2, entraîné en défilement suivant son axe longitudinal jusqu'à un poste d'extraction des oeufs identifiés non conformes comportant un dispositif de transfert 3, adapté à transférer ces oeufs non conformes du tapis convoyeur sur lequel ils défilent vers une zone de collecte des oeufs extraits, hors de la ligne de convoyage. Les oeufs non conformes auront été identifiés comme tels dans un poste de mirage, par exemple un poste d'examen par visiométrie (non représenté), disposé en amont (par rapport au sens de défilement des oeufs) du poste d'extraction sur la ligne de défilement.

Le dispositif de transfert 3 comprend un rouleau 31 monté rotatif au-dessus du tapis convoyeur 2, d'axe transversal à l'axe de défilement du tapis convoyeur 2. Ainsi, les oeufs sont entraînés en défilement en passant sous le rouleau 31. Les parois d'extrémité du rouleau 31 sont portées par des paliers 12, destinés à supporter le rouleau 31 et à en assurer le guidage en rotation entre deux supports d'extrémité 13. La position des paliers 12 par rapport aux supports permet d'ajuster la position du rouleau 31 par rapport au tapis convoyeur 2 sous-jacent. La liaison entre le rouleau et les paliers est réalisée par un joint tournant permettant d'assurer une liaison étanche. Le volume interne du rouleau 31, délimité par sa paroi 311, définit une chambre interne 312, dite chambre principale, destinée à être maintenue en dépression par rapport à l'air environnant, par l'effet d'une pompe à vide (non représentée). Un tuyau (non représenté), permet de connecter l'intérieur du rouleau 31 et la pompe à vide. Des joints tournants sont prévus autour du tuyau au niveau de son passage à travers la paroi d'extrémité du rouleau afin d'assurer l'étanchéité du rouleau et la conservation de la basse pression y régnant.

L'installation comprend également des moyens moteurs 14 d'entraînement en rotation du rouleau 30, ainsi qu'un module de commande 15, destiné à piloter la rotation du rouleau en synchronisme avec le défilement des oeufs sur le tapis convoyeur 2.

Le rouleau 31 porte sur sa périphérie une pluralité d'outils de saisie 32 disposés radialement à son axe. Les outils de saisie 32 occupent toute la périphérie du rouleau. Les outils de saisie 32 sont disposés sur la paroi 311 du rouleau en rangées parallèles entre elles, s'étendant suivant la direction longitudinale du rouleau. Ainsi, lorsqu'elle est amenée en position de prélèvement par la rotation du rouleau, chaque rangée d'outils de saisie est destinée à venir en regard d'une rangée d'oeufs en défilement sous le rouleau, sensiblement à la verticale sous le rouleau. La distribution des outils de saisie sur la périphérie du rouleau, notamment le pas angulaire entre deux rangées d'outils et le pas en distance entre deux outils d'une même rangée, est ajustée en fonction de la géométrie des casiers d'oeufs et de leurs alvéoles réceptrices d'oeufs.

On comprend que l'on pourra prévoir avantageusement que le pas entre chaque rangée d'outils de saisie soit le même que le pas entre chaque rangée d'alvéoles du casier, de sorte que la vitesse de rotation du rouleau et la vitesse de défilement du tapis ne changent pas au cours du processus de saisie pour un casier. La vitesse de rotation du rouleau sera modifiée éventuellement pour s'adapter à l'arrivée d'un nouveau casier et elle redeviendra constante si le pas entre chaque rangée du nouveau casier est le même que précédemment. Toutefois, si le pas entre chaque rangée d'outils de saisie est différent du pas entre chaque rangée du casier, le module de commande est prévu pour permettre d'adapter la vitesse du rouleau entre chaque saisie pour amener une rangée d'outils de saisie en position de prélèvement sous le rouleau en synchronisme avec le passage d'une rangée d'oeufs sous le rouleau. Selon la distance restant à parcourir au casier pour arriver jusqu'au rouleau, le module de commande est adapté à accélérer ou ralentir la rotation du rouleau pendant un temps calculé automatiquement, de façon à ce que la première rangée d'oeufs se trouve correctement alignée par rapport à une rangée d'outils de saisie sur le rouleau amenée en position de prélèvement.

Chaque outil de saisie 32 est munie à son extrémité distale d'une ventouse 321, destinée à être mise en communication avec la chambre principale 312 du rouleau 31 maintenue en dépression. Plus précisément, chaque ventouse 321 est fixée sur une extrémité 322a d'un manchon de support tubulaire 322, s'étendant radialement à l'axe du rouleau 31, de part d'autre de la paroi 311 du rouleau 31. Autrement dit, l'autre extrémité 322b du manchon de support tubulaire 322 est située du côté intérieur du rouleau, à l'opposée de l'extrémité de fixation 322a de la ventouse 321 par rapport à la paroi 311 du rouleau 31. Conformément à l'invention, le manchon de support tubulaire 322 de la ventouse 321 est monté mobile en translation suivant son axe au travers d'un trou 313 ménagé dans la paroi 311 du rouleau 31. Le manchon de support tubulaire 322 de la ventouse 321 est constitué d'un élément de tube creux, fermé à son extrémité 322b opposée à l'extrémité de fixation 322a de la ventouse 321 et ouvert à cette dernière extrémité de fixation 322a, de façon à définir un conduit interne de mise en dépression de la ventouse 321 par l'intermédiaire d'un orifice 322c ménagé sur une paroi latérale de l'élément de tube creux, permettant de créer une communication entre la ventouse 34 montée à l'extrémité de fixation ouverte 322a de l'élément de tube creux et la chambre principale 312 ménagée à l'intérieur du rouleau, maintenue en dépression par rapport à l'air environnant.

L'élément de tube creux 322 s'étend préférentiellement de part et d'autre de la paroi 311 du rouleau 31, à travers une bague de guidage de traversée de paroi 33, comportant un fût 331 en saillie d'une face externe de la paroi 311 de rouleau 31, sur une certaine longueur prédéterminée. La bague 33 est montée par une première extrémité 331a, dite de fixation, dans le trou 313 de la paroi 311 du rouleau 31 et l'élément de tube creux formant le manchon de support tubulaire 322 de la ventouse 321, est connecté par une liaison glissante avec ladite bague de guidage 33, autorisant un mouvement de translation relatif entre l'élément de tube creux et ladite bague de guidage.

Le fût 331 de la bague de guidage 33 comporte par exemple une collerette au niveau de son extrémité de fixation 331a, par laquelle il est apte à prendre appui sur un bord périphérique interne du trou 313 de la paroi 311 du rouleau 31 dans laquelle il doit être monté. Le montage de la collerette sur le bord périphérique interne du trou 313 se fait par l'intermédiaire d'un joint d'étanchéité, afin d'assurer l'étanchéité du rouleau et la conservation de la basse pression y régnant.

Sur la vue de la figure 2, le manchon de support tubulaire 322 de la ventouse 321 est illustré en position rétractée à l'intérieur du rouleau 31 du fait de la dépression qui règne dans la chambre principale 312 ménagée à l'intérieur du rouleau 31. Dans cette position rétractée, le manchon de support tubulaire 322 est déplacé sous l'effet de la dépression qui règne dans le rouleau, de sorte que son extrémité 322b, opposée à son extrémité 322a de fixation de la ventouse 321, est rapprochée sensiblement de l'axe du rouleau 31. L'extrémité de fixation 322a de la ventouse du manchon de support tubulaire 322 est adaptée pour venir, dans cette position rétractée du manchon, en butée contre l'extrémité libre 331b de la bague 33. Autrement dit, dans cette position rétractée du manchon de support tubulaire 322, la majeure partie de ce dernier est logée dans la chambre principale 312 à l'intérieur du rouleau 31, en particulier la partie où est ménagé l'orifice 322c. La ventouse 321 est ainsi mise en dépression par l'intermédiaire de l'orifice 322c mettant en communication la ventouse 321 avec la chambre interne 312 du rouleau. Dans la position rétractée du manchon de support tubulaire 32 illustrée à la figure 2, la ventouse 321 est rapprochée de la face externe de la paroi 311 du rouleau 31.

Par ailleurs, l'outil de saisie 32 à ventouse est illustré à la figure 2 en position de prélèvement. Cette position de prélèvement est définie lorsque la rotation du rouleau 31 par rapport au tapis convoyeur amène l'outil de saisie 32 à ventouse sensiblement à la perpendiculaire du plan défini par le tapis convoyeur 2, autrement dit dans une position relativement au tapis convoyeur 2 où la ventouse 321 est orientée sensiblement en regard du tapis convoyeur 2 sous-jacent.

Ainsi, lorsque les outils de saisie 32 à ventouse portés par le rouleau 31 arrivent en position de prélèvement par la rotation du rouleau, les manchons de support tubulaires 322 correspondants sont en position rétractée dans le rouleau du fait de la dépression régnant dans le rouleau et toutes les ventouses sont mises en dépression par l'orifice 322c assurant la communication avec la chambre principale 312 en dépression. En outre, du fait de la position rétractée des manchons de support tubulaires, les ventouses amenées en position de prélèvement relativement au tapis convoyeur 2 par la rotation du rouleau, sont en position rapprochée par rapport à la face externe de la paroi 311 du rouleau 3. Cette position rapprochée des ventouses 321 est définie de telle sorte que les ventouses 321, lorsqu'elles sont amenées en position de prélèvement par la rotation du rouleau 31, ne soient pas en contact avec les oeufs défilant dessous sur le tapis convoyeur.

On prévoit alors de commander sélectivement la mise en contact avec les oeufs pour les seules ventouses devant prélever un oeuf ayant été identifié non conforme, pour permettre le prélèvement de cet oeuf par aspiration et son extraction du tapis, tandis que les autres ventouses, également amenées en position de prélèvement, mais qui ne doivent pas saisir un oeuf, ne sont pas commandées pour venir en contact avec les oeufs et sont maintenues dans leur position rapprochée de la paroi du rouleau 31, à distance des oeufs.

Ce mode opératoire est particulièrement avantageux, dans la mesure où il permet d'éviter les contacts systématiques avec les oeufs par toutes les ventouses amenées en position de prélèvement, de tels contacts étant susceptibles d'entraîner des risques sanitaires.

La commande de cette mise en contact sélective des ventouses en position de prélèvement avec un oeuf identifié non conforme défilant sous le rouleau, repose sur la mise en oeuvre d'un actionneur 34, permettant de commander sélectivement, dans la position de prélèvement, le déplacement du manchon de support tubulaire 322 de sa position rétractée (figure 2) vers une position déployée en direction du tapis convoyeur 2 (figure 3), de façon que la ventouse 321 correspondante vienne, dans une position éloignée de la face externe de la paroi du rouleau, en prise avec l'œuf identifié non conforme devant être prélevé. Ce mode opératoire présente en outre l'avantage de pouvoir assurer efficacement l'extraction des oeufs, dans la mesure où la ventouse 321 est forcée en déplacement par la commande appliquée sur son manchon de support tubulaire, jusqu'à venir au contact de l'œuf assurant ainsi sa bonne prise par aspiration, y compris lorsque les oeufs en défilement sont susceptibles de présenter des variations de taille.

L'actionneur 34 comprend un vérin 340, qui fait partie d'un ensemble de vérins montés fixes par rapport au rouleau, alignés à l'intérieur du rouleau, de façon à pouvoir commander chacun sélectivement en déplacement un manchon de support tubulaire respectif d'une rangée de ventouses du rouleau, lorsque cette dernière est amenée en position de prélèvement par la rotation du rouleau.

Le vérin 340 est agencé de telle sorte, que lorsqu'il est actionné pour commander le déplacement de la ventouse correspondante en position de prélèvement pour sa mise en contact avec un oeuf identifié non conforme, la tige 341 du vérin vient en contact contre l'extrémité fermée 322b du tube creux constituant le manchon de support tubulaire du manchon et vient pousser ce dernier en direction du tapis convoyeur. Le manchon de support tubulaire prend alors une position déployée telle qu'illustrée à la figure 3.

Dans cette position déployée, le manchon de support tubulaire 322 est déplacé vers le tapis convoyeur sous l'action de la tige 341 de vérin poussant l'extrémité 322b du manchon, qui se rapproche sensiblement de la face interne de la paroi 311 du rouleau 31. Par conséquent, l'extrémité de fixation de la ventouse 321, qui était en butée contre l'extrémité libre 331b de la bague de guidage 33 en position rétractée du manchon, s'éloigne radialement de celle-ci à mesure que le manchon se déplace sous l'action du vérin et partant, la ventouse 321 montée sur l'extrémité de fixation 322a du manchon est amenée en position éloignée de la face externe de la paroi 311 du rouleau, jusqu'à venir en contact avec l'œuf, qui peut être prélevé par aspiration par la ventouse toujours maintenue en dépressions.

Il est essentiel que la ventouse soit maintenue en dépression pendant toute la course de déplacement de celle-ci en direction du tapis convoyeur, pour permettre de venir en prise par aspiration avec l'œuf.

La ventouse 321 est mise en dépression par l'intermédiaire de l'orifice 322c, permettant de mettre en communication la ventouse 321 avec la chambre interne 312 du rouleau. Dans la position rétractée du manchon de support tubulaire 32 illustrée à la figure 2, on a vu que l'orifice 322c est disposé dans la chambre principale 312 en dépression ménagée à l'intérieur du rouleau 31. Il convient donc de maintenir la communication entre la ventouse et la chambre principale par l'intermédiaire de l'orifice 322c sur toute la longueur de la course de déplacement du manchon, de sa position rétractée à sa position déployée. Cela est permis grâce à la configuration particulière du fût 331 de la bague de guidage de traversée de paroi 33 dans laquelle est monté le manchon de support tubulaire de la ventouse.

En référence à la figure 7, la surface interne du fût 331 comporte deux saillies cylindriques de support, respectivement 3311 et 3312, agencées aux extrémités respectives du fût 331a et 331b, qui sont destinées à coopérer par glissement avec la surface externe du manchon 322 monté dans la bague. Ces deux saillies cylindriques de support aux extrémités respectives du fût sont reliées entre elles par une surface cylindrique interne en retrait 3313, définissant avec la surface externe du manchon une chambre secondaire destinée à être reliée à la chambre principale ménagée à l'intérieur du rouleau.

Pour ce faire, comme illustré sur la vue de dessus de la figure 7, la saillie cylindrique de support 3311, agencée du côté de l'extrémité de fixation 331a du fût 331, est pourvue d'une pluralité de gorges longitudinales 3314, permettant de mettre en communication la chambre secondaire ménagée le long du fût de la bague de guidage avec la chambre principale 312 ménagée à l'intérieur du rouleau 31.

Ainsi, lorsque le vérin 34 est actionné pour pousser le manchon de support tubulaire 322 à travers la bague de guidage 33, l'orifice de mise en dépression de la ventouse 322c prévu sur le manchon est disposé dans la chambre secondaire ménagée dans la bague de guidage 33, qui est mise en dépression grâce aux gorges longitudinales 3314 la reliant à la chambre principale 312 ménagée dans le rouleau. L'orifice 322c de mise en dépression de la ventouse 321 prévu sur le manchon de support tubulaire 322 est donc toujours en communication avec la chambre principale 312 en dépression du rouleau, pendant toute la course de déplacement du manchon au travers de la bague de guidage 33, par l'intermédiaire de la chambre secondaire, ce qui permet le transfert de la dépression vers la ventouse. La ventouse est ainsi maintenue en dépression pendant toute la course de déplacement du manchon, jusqu'à la mise en contact de la ventouse 312 avec l'œuf (non représenté).

La bague de guidage 33 permet donc avantageusement d'augmenter la course utile de déplacement du manchon, c'est-à-dire la course de déplacement du manchon où la mise en dépression de la ventouse est maintenue, en permettant d' « étendre » la chambre principale en dépression ménagée à l'intérieur du rouleau dans la chambre secondaire ménagée à l'intérieur de la bague.

On a également représenté sur la figure 7 la collerette 3310 faisant saillie radialement au niveau de l'extrémité de fixation 331a du fût 331 de la bague de guidage 33, pour sa fixation au niveau du trou 313 de la paroi 311 du rouleau 31.

Ensuite, l'œuf à prélever étant en prise par aspiration dans la ventouse 321, on commande le vérin 34 de façon à rétracter la tige 341 de vérin, de sorte que le manchon de support tubulaire 322 revient alors naturellement dans sa position rétractée telle qu'illustrée à la figure 2, du fait de la dépression régnant dans le rouleau.

La ventouse 321, à laquelle est solidarisé un oeuf (non représenté) sous l'effet de l'aspiration par dépression de la ventouse, continue alors sa rotation, tel que cela est visible sur la figure 4. Sensiblement au terme d'un huitième de tour à partir de la position de prélèvement, le manchon de support tubulaire 322 de la ventouse et, plus précisément, son extrémité 322b, est amené en regard d'un moyen formant came 35 s'étendant à l'intérieur du rouleau 31 entre la face interne de sa paroi latérale 311 et son axe de rotation.

La came 35 est montée de façon fixe par rapport au rouleau 31, par exemple par fixation sur l'une des parois d'extrémité 13. La came 35 a pour fonction de forcer le déplacement du manchon de support tubulaire 322 de la ventouse 321 vers l'extérieur lors de la rotation du rouleau, subséquemment à l'atteinte de la position de prélèvement par la ventouse, jusqu'à ce que l'orifice 322c de mise en dépression de la ventouse 321 soit, au moins partiellement, mis à l'air libre, lorsque la ventouse 321 est amenée par la rotation du rouleau dans une position angulaire donnée correspondant à la position de libération, par exemple décalée d'environ trois-quarts de tour après la position de prélèvement atteinte par la ventouse. Dans cette position, l'orifice 322c du manchon étant mis à l'air libre, la ventouse 321 n'est plus en dépression, ce qui permet la libération de l'œuf de la ventouse.

Comme illustré aux figures 4 à 6, l'extrémité 322b du manchon de support tubulaire 322 vient en contact avec l'extrémité initiale de la rampe formée sur la came 35, dont le profil converge vers la face interne de la paroi 311 du rouleau 31 jusqu'à la position de libération. Par l'effet du contact entre la came 35 et l'extrémité 322b du manchon de support tubulaire 322 monté mobile en translation à travers la bague de guidage 33, la rotation du rouleau 31 entraîne le déplacement du manchon vers l'extérieur à travers la bague de guidage 33, jusqu'à une position dite sur-déployée du manchon, atteinte lorsque la ventouse 321 est amenée en position de libération. Dans cette position dite sur-déployée visible à la figure 6, le manchon 322 est forcé en déploiement par l'effet du contact avec la came 35 lors de la rotation du rouleau, de telle sorte que son orifice 322c débouche à l'extérieur de la bague de guidage 33, à l'opposé de celle-ci par rapport à la paroi 311 du rouleau 31, et est donc mis à l'air libre. Cette disposition de l'orifice 322c du manchon de support tubulaire 322 de la ventouse entraîne la fin de l'aspiration de l'œuf par la ventouse.

On parle de position sur-déployée du manchon 322, par contraste avec la position déployée. Dans la première, la ventouse 321 n'est plus en dépression, tandis qu'elle est toujours maintenue en dépression dans la seconde. En effet, la position déployée du manchon 322 correspond à une position du manchon322 déployée vers l'extérieur du rouleau 31 sous l'effet de l'actionneur 34, où la ventouse 321 est éloignée de la paroi 311 du rouleau 31 pour être mise en contact avec l'œuf à prélever et où l'orifice 322c de mise en dépression de la ventouse 321 prévu sur le manchon 322 est toujours maintenu à l'intérieur de la chambre secondaire en dépression ménagée dans la bague de guidage 33 pour maintenir la ventouse 321 en dépression. Par contraste, la position sur-déployée du manchon correspond à une position du manchon 322 déployée vers l'extérieur du rouleau sous l'effet de la came 35 dont le profil permet de forcer le déploiement du manchon 35 vers l'extérieur jusqu'à l'atteinte de la position de libération de la ventouse, où l'orifice 322c de mise en dépression de la ventouse 321 débouche à l'air libre en sortie de la bague de guidage 322.

Dans la position sur-déployée du manchon 322 atteinte lorsque la ventouse est amenée en position de libération par la rotation du rouleau, la ventouse 321 n'est donc plus en dépression. Comme illustré à la figure 6, on prévoit avantageusement que la position de libération de la ventouse 321 corresponde à une rotation du rouleau d'au moins 180° par rapport à la position de prélèvement, où la ventouse 321 est positionnée sensiblement à la verticale sous le rouleau, de sorte que l'œuf puisse être libéré de la ventouse par simple gravité. L'oeuf est par exemple libéré dans un bac de réception des oeufs identifiés non conformes, par exemple disposé sur un tapis récepteur, en défilement perpendiculairement au tapis convoyeur 2, au-dessus de celui-ci, et positionné relativement au rouleau de sorte que les oeufs libérés par l'effet de la gravité des ventouses amenées en position de libération par la rotation du rouleau, tombent dans le bac de réception.

Ensuite, le rouleau 31 poursuit son cycle de rotation au cours duquel la ventouse 321 est ramenée en position de prélèvement. Après la position de libération, la came 35 présente un profil rentrant vers l'intérieur du rouleau propre à permettre la rétractation progressive du manchon de support tubulaire 322 vers l'intérieur du rouleau au cours de la rotation de ce dernier sous l'effet de la dépression régnant dans le rouleau, jusqu'à ce que le manchon revienne dans la position rétractée illustrée à la figure 1. Au cours de cette rétractation du manchon de support tubulaire, l'orifice de mise en dépression 322c du manchon est remis en communication avec la chambre principale 312 en dépression du rouleau, ce qui permet le transfert de cette dépression vers la ventouse 321, qui est alors prête à être de nouveau commandée en prélèvement lors d'un cycle suivant de rotation du rouleau.

## Revendications

1. Installation de tri de pièces en défilement sur un tapis convoyeur (2) comprenant un dispositif de transfert (3) de pièces apte à extraire des pièces sélectivement identifiées non conformes hors dudit tapis convoyeur, le dispositif de transfert de pièces comprenant un rouleau (31) monté mobile en rotation transversalement au-dessus dudit tapis convoyeur et une pluralité d'outils de saisie (32) s'étendant radialement en périphérie dudit rouleau, aptes à prélever sélectivement chacun une pièce dudit tapis convoyeur lorsqu'ils sont amenés dans une position de prélèvement définie par une première position angulaire dudit rouleau et à libérer ladite pièce prélevée lorsqu'ils sont amenés dans une position de libération définie par une deuxième position angulaire dudit rouleau, chaque outil de saisie (32) comprenant une ventouse (321) fixée sur un manchon de support tubulaire (322) monté sur ledit rouleau (31) et débouchant à l'intérieur dudit rouleau (31), ledit manchon de support tubulaire (322) définissant un conduit interne pourvu d'un orifice latéral (322c) apte à créer une communication entre ladite ventouse et une chambre principale (312) ménagée à l'intérieur dudit rouleau maintenue en dépression par rapport à l'air environnant,
**caractérisée en ce que** toutes les ventouses (321) amenées en position de prélèvement sont mises en dépression, chaque manchon de support tubulaire (322) étant monté mobile en translation suivant son axe à travers une paroi (311) dudit rouleau, un actionneur (34) étant adapté à commander sélectivement, dans ladite position de prélèvement, le déplacement dudit manchon de support tubulaire (322) en direction dudit tapis convoyeur de façon que ladite ventouse (321) vienne en prise avec ladite pièce à prélever.

2. Installation selon la revendication 1, **caractérisée en ce que** ledit manchon de support tubulaire (322) est constitué d'un élément de tube creux s'étendant de part et d'autre de la paroi (311) dudit rouleau (31), à travers une bague de guidage de traversée de paroi (33), comportant un fût en saillie (331) d'une face externe de ladite paroi (311), monté par une première extrémité (331 a) dans un trou (313) de ladite paroi, ledit élément de tube creux étant connecté par une liaison glissante avec ladite bague de guidage (33) autorisant un mouvement de translation relatif entre ledit élément de tube creux et ladite bague de guidage.

3. Installation selon la revendication 2, **caractérisée en ce que** la surface interne dudit fût (331) comporte deux saillies cylindriques (3311 , 3312) de support d'une surface externe dudit élément de tube creux (322), agencées aux extrémités respectives dudit fût (331), et reliées entre elles par une surface cylindrique interne en retrait (3313) définissant une chambre secondaire, ladite saillie cylindrique de support (3311) agencée du côté de ladite première extrémité (331 a) dudit fût étant pourvue d'une pluralité de gorges longitudinales (3314) destinées à mettre en communication ladite chambre secondaire avec ladite chambre principale (312) du rouleau.

4. Installation selon la revendication 3, **caractérisée en ce que** ledit élément de tube creux (322) est mobile entre une position rétractée à l'intérieur du rouleau (31), sous l'effet de la dépression régnant dans la chambre principale (312) ménagée à l'intérieur du rouleau (31), dans laquelle ledit orifice (322c) est en communication directe avec ladite chambre principale pour transférer la dépression à ladite ventouse (321), et une position déployée vers le tapis convoyeur (2) sous l'action dudit actionneur (34), dans laquelle ledit orifice (322c) est en communication directe avec ladite chambre secondaire pour transférer la dépression à ladite ventouse (321).

5. Installation selon l'une quelconque des revendications 2 à 4, **caractérisée en ce que** ledit fût (331) présente à sa première extrémité (331 a) une collerette (3310) par laquelle il est apte à prendre appui sur un bord périphérique dudit trou (313), par l'intermédiaire d'un joint d'étanchéité.

6. Installation selon l'une quelconque des revendications précédentes, **caractérisée en ce que** ledit actionneur (34) comporte un vérin monté à l'intérieur dudit rouleau, adapté à pousser ledit manchon de support tubulaire (322) à travers ladite paroi dudit rouleau vers l'extérieur dudit rouleau.

7. Installation selon l'une quelconque des revendications précédentes, **caractérisée en ce qu'**il comprend un moyen formant came (35) agencé à l'intérieur dudit rouleau, fixe par rapport à la rotation dudit rouleau, ladite came (35) étant profilée de sorte que, lors de la rotation dudit rouleau subséquente à l'atteinte de ladite position de prélèvement, ledit manchon de support tubulaire (322) est apte à rencontrer la came (35) et à suivre la trajectoire de came de façon à forcer le déplacement dudit manchon de support tubulaire (322) vers l'extérieur dudit rouleau jusqu'à ce que ledit orifice (322c) soit au moins partiellement mis à l'air libre, en position de libération de l'outil de saisie (32).

8. Installation selon l'une quelconque des revendications précédentes, **caractérisé en ce que** les première et deuxième positions angulaires sont décalées l'une par rapport à l'autre d'au moins 180°.

9. Installation selon l'une quelconque des revendications précédentes, **caractérisée en ce qu'**elle comprend un module de commande (15) adapté à fournir des instructions de vitesse de rotation dudit rouleau, de façon à entraîner la rotation des ventouses (321) avec une vitesse et une phase synchronisées sur le défilement des pièces.

10. Installation selon l'une quelconque des revendications précédentes, **caractérisée en ce qu'**elle est adaptée au traitement des œufs de volailles, ledit dispositif de transfert (3) étant disposé en aval d'un poste de mirage destiné à détecter les oeufs non conformes en vue de leur extraction dudit tapis convoyeur (2) par ledit dispositif de transfert (3).

## Patentansprüche

1. Anlage zum Sortieren von Stücken, die auf einem Förderband (2) entlanglaufen, umfassend eine Stücktransfervorrichtung (3), die dazu geeignet ist, selektiv identifizierte, nicht konforme Stücke aus dem Förderband herauszuziehen, wobei die Stücktransfervorrichtung eine Rolle (31) umfasst, die quer über dem Förderband drehbar montiert ist, und eine Vielzahl von Greifwerkzeugen (32), die sich radial am Umfang der Rolle erstrecken, die dazu ausgebildet sind, selektiv jeweils ein Stück von dem Förderband zu entnehmen, wenn sie in eine Entnahmeposition gebracht werden, die durch eine erste Winkelposition der Rolle definiert ist, und das entnommene Stück freizugeben, wenn sie in eine Freigabeposition gebracht werden, die durch eine zweite Winkelposition der Rolle definiert ist, wobei jedes Greifwerkzeug (32) einen Saugnapf (321) umfasst, der an einer rohrförmigen Stützhülse (322) befestigt ist, die an der Rolle (31) angebracht ist und in das innere der Rolle (31) mündet, wobei die rohrförmige Stützhülse (322) eine innere Leitung mit einer seitlichen Öffnung (322c) definiert, die dazu geeignet ist, eine Verbindung zwischen dem Saugnapf und einer Hauptkammer (312) herzustellen, die sich im Inneren der Rolle befindet und in Bezug auf die umgebende Luft bei Unterdruck gehalten wird,
**dadurch gekennzeichnet, dass** alle Saugnäpfe (321), die in die Entnahmeposition gebracht werden, unter Unterdruck gesetzt werden, wobei jede rohrförmige Stützhülse (322) entlang ihrer Achse durch eine Wand (311) der Rolle translatorisch beweglich angebracht ist, wobei ein Aktuator (34) dazu ausgebildet ist, in der Entnahmeposition die Verlagerung der rohrförmigen Stützhülse (322) in Richtung des Förderbandes selektiv zu steuern, so dass der Saugnapf (321) mit dem zu entnehmenden Teil in Eingriff kommt.

2. Anlage nach Anspruch 1, **dadurch gekennzeichnet, dass** die rohrförmige Stützhülse (322) aus einem hohlen Rohrelement gebildet ist, das sich auf beiden Seiten der Wand (311) der Rolle (31) durch einen Führungsring für die Wanddurchführung (33) erstreckt, der einen von einer Außenseite der Wand (311) vorspringenden Schaft (331) aufweist, der durch ein erstes Ende (331 a) in einem Loch (313) der Wand angebracht ist, wobei das hohle Rohrelement durch eine Gleitverbindung mit dem Führungsring (33) verbunden ist, die eine relative Verlagerungsbewegung zwischen dem hohlen Rohrelement und dem Führungsring ermöglicht.

3. Anlage nach Anspruch 2, **dadurch gekennzeichnet, dass** die Innenfläche des Schafts (331) zwei zylindrische Vorsprünge (3311, 3312) zur Abstützung einer Außenfläche der rohrförmigen Stützhülse (322) aufweist, die an den jeweiligen Enden des Schafts (331) angeordnet und durch eine innere zurückgesetzte Zylinderfläche (3313) miteinander verbunden sind, die eine Nebenkammer definiert, wobei der zylindrische Stützvorsprung (3311), der an der Seite des ersten Endes (331a) des Schafts angeordnet ist, mit einer Vielzahl von Längsnuten (3314) versehen ist, die dazu bestimmt sind, die Nebenkammer mit der Hauptkammer (312) der Rolle zu verbinden.

4. Anlage nach Anspruch 3, **dadurch gekennzeichnet, dass** die rohrförmige Stützhülse (322) unter dem Einfluss des Unterdrucks in der Hauptkammer (312), die im Inneren der Rolle (31) angeordnet ist, beweglich zwischen einer eingezogenen Position innerhalb der Rolle (31), wobei die Öffnung (322c) in direkter Verbindung mit der Hauptkammer steht, um den Unterdruck auf den Saugnapf (321) zu übertragen, und einer Position, die unter der Wirkung des Aktuators (34) in Richtung des Förderbands (2) ausgefahren ist, wobei die Öffnung (322c) in direkter Verbindung mit der Nebenkammer steht, um den Unterdruck auf den Saugnapf (321) zu übertragen.

5. Anlage nach einem der Ansprüche 2 bis 4, **dadurch gekennzeichnet, dass** der Schaft (331) an seinem ersten Ende (331a) einen Kragen (3310) aufweist, mit dem er sich über eine Dichtung an einem peripheren Rand des Lochs (313) abstützen kann.

6. Anlage nach einem der vorhergehenden Ansprüche, **dadurch gekennzeichnet, dass** der Aktuator (34) einen innerhalb der Rolle angebrachten Heber aufweist, der dazu geeignet ist, die rohrförmige Stützhülse (322) durch die Wand der Rolle in Richtung des Äußeren der Rolle zu drücken.

7. Anlage nach einem der vorhergehenden Ansprüche, **dadurch gekennzeichnet, dass** sie ein nockenbildendes Mittel (35) umfasst, das innerhalb der Rolle angeordnet ist und in Bezug auf die Drehung der Rolle fixiert ist, wobei die Nocke (35) derart profiliert ist, dass bei der Drehung der Rolle nach dem Erreichen der Entnahmeposition, die rohrförmige Stützhülse (322) in der Lage ist, auf die Nocke (35) zu treffen und der Nockenbahn zu folgen, um die Verlagerung der rohrförmigen Stützhülse (322) zur Außenseite der Rolle hin zu erzwingen, bis die Öffnung (322c) wenigstens teilweise in die Position zur Freigabe des Greifwerkzeugs (32) gebracht wird.

8. Anlage nach einem der vorhergehenden Ansprüche, **dadurch gekennzeichnet, dass** die erste und zweite Winkelposition um wenigstens 180° gegeneinander versetzt sind.

9. Anlage nach einem der vorhergehenden Ansprüche, **dadurch gekennzeichnet, dass** sie ein Steuermodul (15) umfasst, das dazu ausgebildet ist, Anweisungen zur Rotationsgeschwindigkeit der Rolle zu geben, um die Rotation der Saugnäpfe (321) mit einer Geschwindigkeit und einer Phase anzutreiben, die mit dem Vorbeilaufen der Teile synchronisiert sind.

10. Anlage nach einem der vorhergehenden Ansprüche, **dadurch gekennzeichnet, dass** sie für die Verarbeitung von Geflügeleiern geeignet ist, wobei die Transfervorrichtung (3) stromabwärts einer Spiegelstation angeordnet ist, die dazu bestimmt ist, nicht konforme Eier zu erkennen, damit sie von der Transfervorrichtung (3) von dem Förderband (2) entfernt werden können.

## Claims

1. A unit for sorting moving parts on a conveyor belt (2), comprising a parts transfer device (3) that is capable of extracting from said conveyor belt parts selectively identified as non-compliant, the parts transfer device comprising a roller (31) mounted so as to be transversely rotatable above said conveyor belt, and a plurality of gripping tools (32) which extend radially at the periphery of said roller and are capable of each selectively removing one part from said conveyor belt when they are brought into a removal position defined by a first angular position of said roller, and of releasing said removed part when they are brought into a release position defined by a second angular position of said roller, each gripping tool (32) comprising a suction cup (321) that is fixed on a tubular support sleeve (322) which is mounted on said roller (31) and leads into the inside of said roller (31), said tubular support sleeve (322) defining an inner duct that is provided with a lateral opening (322c) capable of establishing communication between said suction cup and a main chamber (312) arranged inside said roller that is kept under depression with respect to the ambient air,
**characterized in that** all the suction cups (321) brought into the removal position are placed under depression, each tubular support sleeve (322) being mounted so as to be movable in translation according to the axis thereof through a wall (311) of said roller, an actuator (34) being capable of selectively commanding, in said removal position, the movement of said tubular support sleeve (322) in the direction of said conveyor belt, such that said suction cup (321) comes into engagement with said part to be removed.

2. The unit according to claim 1, **characterized in that** said tubular support sleeve (322) is formed of a hollow tube element extending on either side of the wall (311) of said roller (31), via a guide ring passing through the wall (33), comprising a shank protruding (331) from an outer face of said wall (311) which is mounted by a first end (331a) in a hole (313) of said wall, said hollow tube element being connected by a sliding connection to said guide ring (33) which allows for a relative translational movement between said hollow tube element and said guide ring.

3. The unit according to claim 2, **characterized in that** the inner surface of said shank (331) comprises two cylindrical support protrusions (3311, 3312) for supporting an outer surface of said hollow tube element (322), said protrusions being arranged at the respective ends of said shank (331) and interconnected by a set back inner cylindrical surface (3313) which defines a secondary chamber, said cylindrical support protrusion (3311) arranged on the side of said first end (331a) of said shank being provided with a plurality of longitudinal grooves (3314) which are intended to bring said secondary chamber into communication with said main chamber (312) of the roller.

4. The unit according to claim 3, **characterized in that** said hollow tube element (322) is movable between a position retracted inside the roller (31), under the effect of the depression prevailing in the main chamber (312) arranged inside the roller (31), in which position said opening (322c) is in direct communication with said main chamber in order to transfer the depression to said suction cup (321), and a position deployed towards the conveyor belt (2) under the action of said actuator (34), in which position said opening (322c) is in direct communication with said secondary chamber in order to transfer the depression to said suction cup (321).

5. The unit according to any of the claims 2 to 4, **characterized in that** said shank (331) comprises, at the first end (331a) thereof, a flange (3310) by means of which it can bear on a peripheral edge of said hole (313), by way of a sealing joint.

6. The unit according to any one of the preceding claims, **characterized in that** said actuator (34) comprises a cylinder that is mounted inside said roller, which cylinder is capable of pushing said tubular support sleeve (322) through said wall of said roller towards the outside of said roller.

7. The unit according to any one of the preceding claims, **characterized in that** it comprises a means that forms a cam (35) and is arranged inside said roller and is fixed with respect to the rotation of said roller, said cam (35) being profiled such that, during the rotation of said roller after reaching said removal position, said tubular support sleeve (322) is capable of encountering the cam (35) and following the cam trajectory so as to force the movement of said tubular support sleeve (322) towards the outside of said roller until said opening (322c) is positioned in the open air, at least in part, in the release position of the gripping tool (32).

8. The unit according to any one of the preceding claims, **characterized in that** the first and second angular positions are offset with respect to one another by at least 180°.

9. The unit according to any one of the preceding claims, **characterized in that** it comprises a control module (15) capable of providing rotational speed instructions of said roller so as to bring about the rotation of the suction cups (321) in a manner having a speed and phase synchronized to the movement of the parts.

10. The unit according to any one of the preceding claims, **characterized in that** it is suitable for the processing of poultry eggs, said transfer device (3) being arranged downstream of a candling station intended for detecting the non-compliant eggs with a view to extracting them from said conveyor belt (2) by means of said transfer device (3).
